Europäisches Patentamt

European Patent Office

Office européen des brevets

(11) Veröffentlichungsnummer: **0 118 123**
**B1**

(12) **EUROPÄISCHE PATENTSCHRIFT**

(45) Veröffentlichungstag der Patentschrift:
08.03.89

(21) Anmeldenummer: 84102266.8

(22) Anmeldetag: 02.03.84

(51) Int. Cl.⁴: **H 04 J 3/04**

(54) Verfahren zur Übertragung und zum Empfang von digitalen Informationssignalen.

(30) Priorität: 07.03.83 DE 3308025

(43) Veröffentlichungstag der Anmeldung:
12.09.84 Patentblatt 84/37

(45) Bekanntmachung des Hinweises auf die Patenterteilung:
08.03.89 Patentblatt 89/10

(84) Benannte Vertragsstaaten:
AT BE CH DE FR GB IT LI LU NL SE

(56) Entgegenhaltungen:
EP-A-0 073 979
DE-A-3 126 880

RUNDFUNKTECHNISCHE MITTEILUNGEN, Band
24, Nr. 1, 1980, Seiten 31-36, Hamburg, DE; W.
THOMA: "Digitale Tonprogrammübertragung über
2048-Kbit/s-Verbindungen"
NACHRICHTENTECHNISCHE ZEITUNG, Band 29,
Nr. 5, 1976, Seiten 390-394, Berlin, DE; J.D. BÜCHS:
"Einfache Differenzcodierer und -decodierer für
Systeme mit vierstufiger
Phasendifferenzmodulation"

(73) Patentinhaber: **TELEFUNKEN Fernseh und
Rundfunk GmbH, Göttinger Chaussee 76, D-3000
Hannover 91 (DE)**
Patentinhaber: **ANT Nachrichtentechnik GmbH,
Gerberstrasse 33, D-7150 Backnang (DE)**

(72) Erfinder: **Klank, Otto, Dipl.- Ing., Allensteiner
Strasse 12, D-3160 Lehrte- Arpke (DE)**
Erfinder: **Schreitmüller, Werner, Dipl.- Ing.,
Fabrikstrasse 58, D-7150 Backnang (DE)**

(74) Vertreter: **Einsel, Robert, Dipl.- Ing., TELEFUNKEN
Fernseh und Rundfunk GmbH Göttinger
Chaussee 76, D-3000 Hannover 91 (DE)**

## Beschreibung

Die Erfindung betrifft ein Verfahren zur Übertragung und zum Empfang von Informationssignalen, insbesondere für die digitale Tonübertragung über Satelliten, gemäß dem Oberbegriff des Patentanspruchs 1.

Beim Satelliten-Stereo-Rundfunk ist es bekannt, über einen Übertragungsweg eine Vielzahl von verschiedenen Programmen zu Übertragen, aus denen auf der Empfängerseite dann jedes beliebige selektiv ausgewählt werden kann. Diese Übertragung erfolgt z. B. im Zeitmultiplex. Dabei werden jeweils innerhalb eines sogenannten Rahmens, d.h. einer definierten Zeitperiode, zeitlich nacheinander Bitwörter für den linken Kanal des ersten Programms, den rechten Kanal des ersten Programms, den linken Kanal des zweiten Programms, den rechten Kanal des zweiten Programms, den linken Kanals des dritten Programms usw. übertragen. Nach Ablauf eines solchen Rahmens beginnt die sequentielle Übertragung wieder erneut mit dem linken Kanal des ersten Prgramms usw.

Bei der digitalen Informationsübertragung über Satelliten treten nur statistisch verteilte Einzelbitfehler (Gaußsches Rauschen) auf, wie in "British Telecommunications: OTS and Digital 'Television Transmission Investigations of Error Statistics Relevant to the Design of Error Correctors for Television (20.11.80)'" beschrieben wird. Für die Korrektur von statistisch verteilten Fehlern eignen sich im hohen Maße die zyklischen Codes.

Es ist vorgeschlagen worden (DE-P-31 34 831.9), zur Fehlererkennung und -korrektur einen BCH-Code 63/44 zu verwenden. Mit diesem Code kann man mit Hilfe einer geeigneten Decoderschaltung z. B. fünf Fehler erkennen, von denen zwei Fehler durch den Code korrigierbar sind. Die drei weiteren erkannten Fehler werden durch eine geeignete Schaltung interpoliert.

Bei Phasendifferenzmodulation entstehen am Demodulatorausgang vorwiegend Doppel-Bitfehler, die die Wirksamkeit der Fehlererkennung bzw. -korrektur von Block-Codes unzulässig begrenzen. Schon drei Übertragungsfehler werden von diesem Code u.U. nicht mehr erkannt und zwei Übertragungsfehler bewirken eine Fehlererkennung an Stelle einer vollständigen Korrektur. Infolge der Differenzauswertung führt nämlich ein auf der Übertragungsstrecke verfälschtes Bit im Demodulator zu zwei falschen Aussagen: zum einen wird dieses falsche Bit auf ein vorangegangenes richtiges Bit bezogen und zum anderen wird das folgende richtige Bit auf dieses vorangegangene falsche Bit bezogen.

Aufgabe der Erfindung ist es, bei einem Verfahren nach dem Oberbegriff des Patentanspruchs 1, insbesondere bei der Anwendung von Block-Code 63/44 und Phasendifferenzmodulation, die Fehlererkennung bzw. -korrektur zu verbessern.

Die Aufgabe wird durch die im Patentanspruch 1 angegebene Erfindung gelöst.

Vorteilhafte Weiterbildungen der Erfindung sind in den Unteransprüchen angegeben.

Das erfindungsgemäße Verfahren zeichnet sich dadurch aus, daß durch Spreizung die Informationsbits einer ersten Information durch Bits von anderen Informationen getrennt sind. Dies wird dadurch erreicht, daß die Datenfolgen zweier oder mehrerer BCH-Blöcke im Einzelbit-Multiplexverfahren miteinander verschachtelt sind. Treten z. B. statt Einzelbitfehler nur Doppelfehler auf, konnten mit den in der DE-P-3 134 831.9 erwähnten Verfahren bisher nur zwei Doppelfehler erkannt und ein Doppelfehler korrigiert werden

Bei einer Spreizung von zwei BCH-Blöcken wodurch fehlerhafte Bit auf beide Blöcke verteilt werden, können fünf Doppelfehler erkannt und interpoliert bzw. zwei Doppelfehler korrigiert werden. Bei diesem Beispiel ist eine Erkennung eines Blockfehlers von bis zu zehn Bits möglich.

Eine Verschachtelung des ganzen Teilrahmens (vier BCH-Blöcke) erhöht die Sicherheit gegen Blockfehler weiter. Nachteilig ist jedoch eine erhöhte Trefferwahrscheinlichkeit der auftretenden Fehler. Die Verschachtelung jeweils zweier BCH-Blöcke stellt daher eine günstige Kompromißlösung dar.

Bei den ursprünglichen Rahmen ohne Verschachtelung ist eine Verarbeitungsgeschwindigkeit des Demodulators für eine Datenrate von 10,24 MHz/s erforderlich. Bei der Verschachtelung von zwei BCH-Blöcken senkt sich die Datenrate auf 5,12 MHz /s. Für die halbierte Verarbeitungsgeschwindigkeit läßt sich vorteilhafterweise ein Demodulator in MOS-Technik aufbauen.

Es wird vorgeschlagen, das zu übertragende Digitalsignal in Form von 4-Phasen-Winkeländerungen oder -Differenzen des Trägers vom Sender zum Empfänger zu übertragen. Dies geschient in der Weise, daß im Sender eine vierstufige Phasendifferenzmodulation und im Empfänger eine entsprechende Differenzdemodulation vorgenommen wird, wie sie in "Nachrichtentechnische Zeitung, 29 (1976), Heft 5, S. 390-294" beschrieben ist. Ein alternatives Demodulatorkonzept, auf das diese Erfindung ebenfalls anwendbar ist, verwendet kohärente Demodulation mit differentieller Dekodierung. Dies bei diesem Verfahren günstigere Systemverhalten wird mit höherem Aufwand erkauft.

Im Gegensatz zur voll kohärenten Modulation, bei der die Vierdeutigkeit der 4-Phasenumtastung bei der Demodulation durch geeignete Schaltungsmaßnahmen eliminiert werden muß, wie dies in DE-P-3 125 894.8 vorgeschlagen ist, ist bei der Phasendifferenzmodulation bzw. -Dekodierung diese Vierdeutigkeit nicht mehr vorhanden. Die Information liegt in der Differenz zweier aufeinander folgender Bits. Phasendifferenzdemodulation ist besonders geeignet bei digitaler Tonübertragung in der Austastlücke des Fernsehsignals. Da der Träger nicht im Demodulator abgeleitet werden muß, muß beim Fernseh-Multiplexverfahren mit Übertragung eines digitalen Fernsehbegleittones in der Austastlücke bei der differentiellen Modulation nur der Bittakt aus dem Signal abgeleitet werden. Eine fortlaufende Überprüfung, ob der empfangene Rahmen richtig synchronisiert ist, entfällt.

Die Erfindung wird nachstehend anhand eines Ausführungsbeispiels näher beschrieben.

Es zeigen:

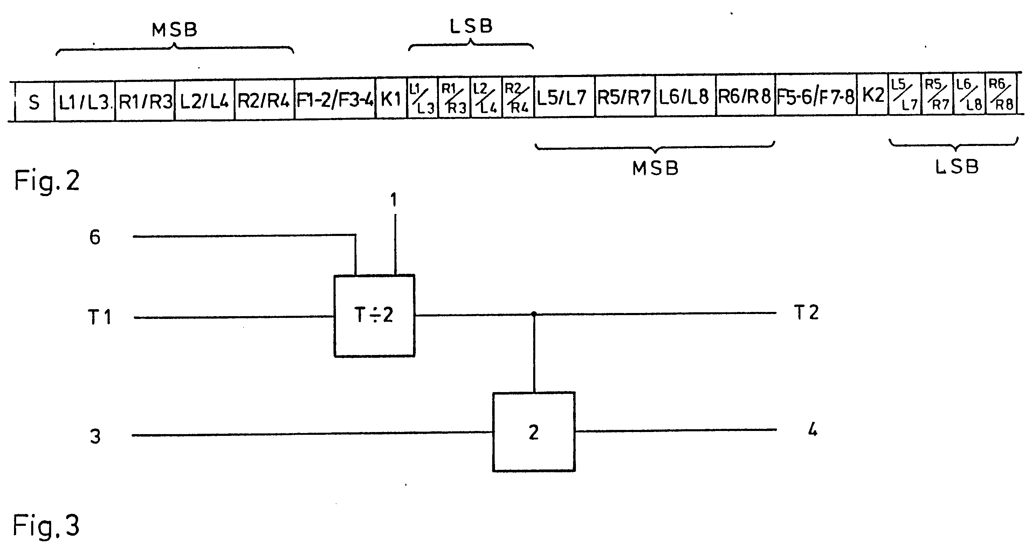

Fig. 3 den Aufbau einer Verschachtelung zweier BCH-Blöcke,

Fig. 2 den Aufbau eines als Halbrahmen ausgebildeten Teilrahmens für 4-Phasenumtastung,

Fig. 3 einen Schaltungsvorschlag für die BCH-Blockauswahl.

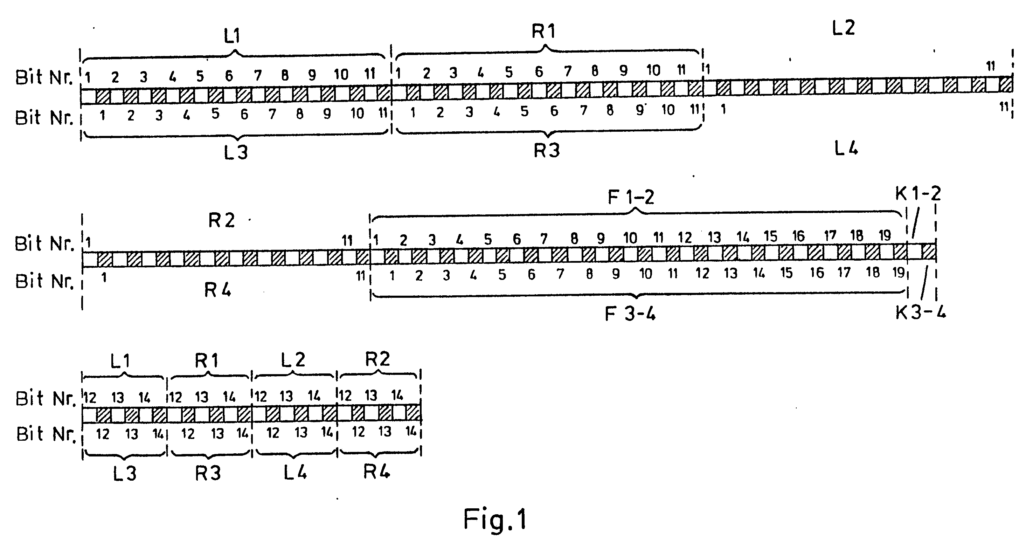

Fig. 1 zeigt den Aufbau einer Verschachtelung zweier BCH-Blöcke. Bei 8 Stereokanälen in einem als Halbrahmen ausgebildeten Teilrahmen kennzeichnet ein Buchstabe L einen linken Kanal und ein Buchstabe R einen rechten Kanal eines Stereoprogramms. L1 ist z. B. der linke Kanal eines ersten Stereoprogrammes und R3 der rechte Kanal eines dritten Stereoprogramms. Ein Abtastwert besteht aus 14 Bits, die in 11 höherwertige Bits, kurz MSB genannt, und 3 niederwertige Bits, kurz LSB genannt, unterteilt sind. Je zwei Stereoprogramme sind zu einem BCH-Block zusammengefaßt. Ein erster BCH-Block besteht aus den Stereoprogrammen 1 und 2, ein zweiter BCH-Block aus den Stereoprogrammen 3 und 4. Die ersten 22 Bits sind die MSB von L1 und L3. Ein erstes Bit ist Bit Nr. 1 von L1, ein zweites Bit ist Bit Nr. 1 von L2, und dann folgt als drittes Bit Bit Nr. 2 von L1, als viertes Bit Bit Nr. 2 von L2 usw. Dann folgen die 22 MSB von R2 und R4. Zu den beiden BCH-Blöcken gehören je 19 Prüfbits F1 - 2 und F3 - 4. Sie schließen sich an die 88 MSB von L1 bis R4 an.

Wie in DE-PS-3 126 880.3 vorgeschlagen, sind Informationsbits in Gestalt von Kennbits für Programmart und Programmnummer im Halbrahmen vorhanden. Je ein Kennbit für einen BCH-Block schließt sich bei diesem erfindungsgemäßen Rahmen an die Prüfbits F1 - 2/F3 - 4 der beiden BCH-Blöcke an. Hinter diesen Kennbits K1 - 2, K3 - 4 folgen insgesamt 24 LSB der beiden BCH-Blöcke, und zwar die LSB von L1/L3, dann R1/R3, weiter L2/L4 und R2/R4.

Dieser Aufbau wiederholt sich daran anschließend bis zum Ende des Halbrahmens für die Stereoprogramme 5 bis 8, so daß insgesamt 2 x 152 Bits verschachtelt sind. 16 Bits sind am Anfang eines Halbrahmens für ein Synchronwort und/oder Sonderdienste reserviert. Insgesamt hat dieser Halbrahmen eine Länge von 320 Bits. Der Aufbau des zweiten Halbrahmens für die Stereoprogramme 9 bis 16 ist identisch.

Fig. 2 zeigt einen vollständigen Halbrahmen für 4-Phasenumtastung. Der Halbrahmen beginnt mit 16 unverschachtelten Bits S für Synchronwort und/oder Sonderdienste. Daran schließen sich die in Fig. 1 gezeigten Bitfolgen L1/L3 (MSB) bis R2/R4 (LSB) für die beiden BCH-Blöcke mit zwei Kennbits K1 für Programmwahl und Programmnummer an. Die folgenden beiden verschachtelten BCH-Blöcke für die Stereoprogramme 5 bis 8 sind ebenfalls wie in Fig. 1 aufgebaut mit K2 als Kennbit für diese Blöcke.

Fig. 3 zeigt eine Schaltung für eine BCH-Blockauswahl.

Liegt ein Synchronimpuls am Eingang 6 und ein Signal für den gewünschten BCH-Block am Eingang 1 eines Teilers 5 an, wird in diesem Teiler 5 ein Takt T1 von 10,24 MHz auf einen Takt T2 von 5,12 MHz heruntergeteilt. An einem Eingang 3 liegt eine Rahmenbitfolge an, die einem elektronischen Schalter 2 zugeführt wird. Aus der Rahmenbitfolge wird dann ein gewünschter BCH-Block mit einer Taktgeschwindigkeit von 5,12 MHz/s ausgetastet und einem Ausgang 4 zugeführt.

**Patentansprüche**

1. Verfahren zur Übertragung und zum Empfang von digitalen Informationssignalen, insbesondere für die digitale Tonübertragung von Stereo- oder Monokanälen verschiedener Programme über Satelliten, bei dem Datenfolgen digitalisierter Abtastwerte als 4-phasenumgetastete Signale (4-PSK) in einem aus Teilrahmen gebildeten Rahmen zeitlich nacheinander angeordnet sind, <u>dadurch gekennzeichnet</u>, daß ein Fehlerkorrektursystem mit Blockbildung über zwei Stereokanäle bzw. 4 Monokanäle verwendet wird und die Datenfolgen in jedem Teilrahmen über mindestens zwei Blöcke im Einzelbit-Multiplexverfahren verschachtelt sind, so daß je Teilrahmen zwei aufeinanderfolgende Bits eines jeden Abtastwertes mindestens durch ein einem anderen Abtastwert zugeordnetes Bit getrennt sind und bei Doppelbitfehlern die fehlerhaften Bits auf unterschiedliche Blöcke verteilt werden.

2. Verfahren nach Anspruch 1, <u>dadurch gekennzeichnet</u>, daß die höherwertigen Bits (MSB) von je vier Abtastwerten in einem zyklischen Block-Code zusammengefaßt sind.

3. Verfahren nach Anspruch 1 oder 2, <u>dadurch gekennzeichnet</u>, daß eine Bitsequenz aus einem zyklischen Block-Code, den dazugehörigen niederwertigen Bits und einem Bit für Zusatzinformationen besteht.

4. Verfahren nach Anspruch 3, <u>dadurch gekennzeichnet</u>, daß je zwei Bitsequenzen im Einzelbit-Multiplexverfahren miteinander verschachtelt sind.

5. Verfahren nach Anspruch 1, <u>dadurch gekennzeichnet, daß der Rahmen aus zwei Teilrahmen mit je 320 Bits besteht.</u>

6. Verfahren nach Anspruch 1 oder 5, dadurch gekennzeichnet, daß ein Teilrahmen 16 Abtastwerte enthält, die 8 Stereokanälen oder 16 Monokanälen oder einer Kombination aus Stereo- und Monokanälen zugeordnet sind.

7. Verfahren nach Anspruch 6, dadurch gekennzeichnet, daß ein Abtastwert aus 14 Bits besteht, die in 11 höherwertige Bits (MSB) und drei niederwertige Bits (LSB) aufgeteilt sind.

8. Verfahren nach Anspruch 1 oder 2, dadurch gekennzeichnet, daß die ersten 16 Bits eines Teilrahmens für Sonderdienste und/oder für ein Synchronwort reserviert sind.

9. Verfahren nach Anspruch 5, dadurch gekennzeichnet, daß als zyklischer Block-Code ein 63,44 BCH-Code verwendet wird.

10. Verfahren nach Anspruch 1, dadurch gekenneichnet, daß die digitalen Informationssignale in Form von vier Phasenwinkeländerungen oder -differenzen des Trägers vom Sender zum Empfänger übertragen werden.

11. Verfahren nach Anspruch 10, dadurch gekennzeichnet, daß im Empfänger eine Phasendifferenzmodulation oder eine kohärente Demodulation mit nachfolgender differentieller Dekodierung des empfangenen Signals vorgenommen wird.

characterized in that the frame consists of two part frames with 320 bits each.

6. A method according to Claim 1 or 5, characterized in that a part frame contains 16 scanning values, which are assigned to 8 stereo channels or 16 mono channels or a combination of stereo- and mono channels.

7. A method according to Claim 6, characterized in that a scanning value consists of 14 bits which are divided up into 11 higher value bits (MSB) and three lower value bits (LSB).

8. A method according to Claim 1 or 2, characterized in that the first 16 bits of a part frame are reserved for special services and/or for a synchronous word.

9. A method according to Claim 5, characterized in that a 63, 44 BCH code is used as cyclic block code.

10. A method according to Claim 1, characterized in that the digital information signals are transmitted in the form of four phase angular variations or differences of the carrier fronm transmitter to receiver.

11. A method according to Claim 10, characterized in that there is undertaken in the receiver a phase difference modulation or a coherent demodulation with subsequent differential decoding of the received signal.

## Claims

1. A method for the transmission and for the reception of digital information signals, in particular for digital sound transmission of stereo- or mono channels of different programmes via satellites in which data sequences of digitised scanning values are arranged chronologically sequentially as 4 phase-shift keyed signals (4-PSK) in a frame formed from part frames, characterized in that an error correction system with block formation via two stereo channels or 4 mono channels is used and the data sequences in each part frame are interleaved by means of at least two blocks in the individual bit multiplex method, so that for each part frame two sequential bits of each scanning value are separated by a bit associated with another scanning value and, in the case of double bit errors, the erroneous bits are distributed in different blocks.

2. A method according to Claim 1, characterized in that the higher value bits (MSB) of each four scanning values are collected together in a cyclic block code.

3. A method according to Claim 1 or 2, characterized in that a bit sequence consists of a cyclic block code, the lower value bits belonging thereto and a bit for additional information.

4. A method according to Claim 3, characterized in that each two bit sequences are interleaved with each other in the individual bit multiplex method.

5. A method according to Claim 1,

## Revendications

1. Procédé de transmission et de réception de signaux numériques d'informations, notamment pour la transmission numérique du son de canaux stéréo ou mono de différents programmes par l'intermédiaire de satellites, et selon lequel des suites de données de valeurs d'échantillonnage numérisées sont rangées successivement dans le temps sous la forme de signaux codés selon un codage à 4 phases (4-PSK) dans une trame formée de trames partielles, caractérisé en ce qu'on utilise un système de correction d'erreurs avec formation de blocs par l'intermédiaire de deux canaux stéréo ou de 4 canaux mono et les suites de données dans chaque trame partielle sont imbriquées, sur au moins deux blocs, selon un procédé de multiplexage à bits individuels, de sorte que pour chaque trame partielle, deux bits successifs de chaque valeur d'échantillonnage sont séparés au moins par un bit associé à une autre valeur d'échantillonnage, et dans le cas d'erreurs doubles sur les bits, les bits défectueux sont répartis entre des blocs différents.

2. Procédé selon la revendication 1, caractérisé en ce que les bits de poids maximum (MSB) de quatre valeurs respectives d'échantillonnage sont rassemblés dans un code de bloc cyclique.

3. Procédé selon la revendication 1 ou 2, caractérisé en ce qu'une séquence binaire est constituée par un code de bloc cyclique, par les bits de poids les plus faibles qui y sont associés et par un bit pour des informations supplémentaires.

4. Procédé selon la revendication 3, caractérisé en ce que deux séquences binaires respectives sont imbriquées entre elles selon le procédé de multiplexage à bits individuels.

5. Procédé selon la revendication 1, caractérisé en ce que la trame est formée de deux trames individuelles comportant chacune 320 bits.

6. Procédé selon la revendication 1 ou 5, caractérisé en ce qu'une trame partielle contient 16 valeurs d'échantillonnage, qui sont associées à 8 canaux stéréo ou à 16 canaux mono ou bien à une combinaison de canaux stéréo et de canaux mono.

7. Procédé selon la revendication 6, caractérisé en ce qu'une valeur d'échantillonnage est formée de 14 bits, qui sont subdivisés en 11 bits de poids maximum (MSB) et en trois bits de poids minimum (LSB).

8. Procédé selon la revendication 1 ou 2, caractérisé en ce que les 16 premiers bits d'une trame partielle sont réservés pour des services particuliers et/ou pour un mot de synchronisation.

9. Procédé selon la revendication 5, caractérisé en ce qu'on utilise comme code de bloc cyclique un code PCH 63, 44.

10. Procédé selon la revendication 1, caractérisé en ce que les signaux numériques d'informations sont transmis de l'émetteur au récepteur sous la forme de quatre modifications ou différences de l'angle de phase de la porteuse.

11. Procédé selon la revendication 10, caractérisé en ce que dans le récepteur se trouve réalisée une modulation de la différence de phase ou une démodulation cohérente avec un décodage différentiel ultérieur du signal reçu.

Fig.1

| S | L1/L3 | R1/R3 | L2/L4 | R2/R4 | F1-2/F3-4 | K1 | L1/L3 | R1/R3 | L2/L4 | R2/R4 | L5/L7 | R5/R7 | L6/L8 | R6/R8 | F5-6/F7-8 | K2 | L5/L7 | R5/R7 | L6/L8 | R6/R8 |

MSB     LSB     MSB     LSB

Fig.2

Fig.3

T ÷ 2

T1   T2